# EUROPEAN PATENT SPECIFICATION

(11) **EP 0 781 200 B1**
(45) Date of publication and mention of the grant of the patent: **05.01.2000**
(21) Application number: 95934425.0
(22) Date of filing: 12.09.1995
(51) Int. Cl.: B32B 27/18, B65B 55/19

(54) **OXYGEN SCAVENGING STRUCTURES HAVING ORGANIC OXYGEN SCAVENGING MATERIAL AND HAVING A POLYMERIC SELECTIVE BARRIER**
SAUERSTOFFAUFNEHMENDE STRUKTUR MIT ORGANISCHEM, SAUERSTOFFAUFNEHMENDEM MATERIAL UND MIT EINER POLYMEREN SELEKTIVEN BARRIERE
STRUCTURES ABSORBANT L'OXYGENE COMPORTANT UN MATERIAU ORGANIQUE ABSORBEUR D'OXYGENE ET UNE BARRIERE POLYMERE SELECTIVE

(30) Priority: 12.09.1994 US 304303
(43) Date of publication of application: 02.07.1997
(73) Proprietor: Chevron Chemical Company LLC, San Francisco, CA 94105 (US)
(72) Inventor: CHING, Ta, Yen, Novato, CA 94945 (US); KATSUMOTO, Kiyoshi, El Cerrito, CA 94530 (US); GOODRICH, Joseph, L., Lafayette, CA 94549 (US); GALLET, J., Diores, Orange, TX 77630 (US)
(74) Representative: Nash, David Allan
(86) International application number: US9511706
(87) International publication number: WO9608371

(56) References cited:
- US-A- 4 536 409
- US-A- 5 021 515
- US-A- 5 310 497

## Description

### BACKGROUND AND SUMMARY OF THE INVENTION

Organic oxygen scavenging materials have been developed partly in response to the food industry's goal of having longer shelf-life for packaged food. These oxygen scavenging materials constitute at least a portion of the food package, and these materials remove oxygen from the enclosed package volume which surrounds the food product, thereby inhibiting spoilage of the food.

Organic oxygen scavenging materials can be low molecular-weight oligomers that are typically incorporated into polymers or can be oxygen-scavenging polymers in which either the backbone is designed to break apart when the polymer reacts with oxygen or in which, initially at least, side-chains react with oxygen. A wide variety of organic compounds are produced because of oxidation of the organic oxygen scavenging material. Many of these oxidation products can migrate from the layer carrying an organic oxygen scavenging material and enter the air surrounding the food or even enter the food itself.

Oxidation products can have foul odors or can even be compounds that are generally regarded as unsafe for human consumption. It is therefore highly desirable to provide a way to prevent odorous oxidation products and/or oxidation products that should not be consumed from entering a packaged volume that contains food.

One way to solve the problem of migration of oxidation products is to form a composition comprising two layers, where one layer carries an organic oxygen scavenging material and one layer is a barrier situated between the packaged volume and the layer carrying an organic oxygen scavenging material. The problem with this approach is that many barriers that are effective to block oxidation products from migrating into the enclosed volume of the package also block oxygen from migrating from the enclosed volume to the organic oxygen scavenging material.

This invention provides compositions that overcome these problems.

The matter for which protection is sought is defined in independent claims 1, 2, 8, 9, 16, 17, 18 and 21.

In specific embodiments, the layer carrying an organic oxygen scavenging material is a polymer having oxidizable sites and having a transition metal salt catalyst that accelerates oxidation of the oxidizable sites. A particularly useful layer is an ethylene-methyl acrylate-benzyl acrylate copolymer having a cobalt salt blended therein.

In other embodiments, the polymeric selective barrier layer is a polymer that has been oriented in at least the machine direction, such as oriented poly(ethylene terephthalate) or biaxially oriented nylon-6.

Among other factors, this invention is based on the discovery that the combination of two layers, one which carries a polymeric oxygen scavenging material and one in which a polymer selectively blocks or impedes migration of oxidation products but readily transmits oxygen, provides compositions which can reduce spoilage of food or otherwise extend the shelf-life of oxygen-sensitive products and can greatly reduce the amount and type of oxidation products that enter the enclosed volume of the package in which the layers are incorporated. Also, this invention is based on the discovery that the glass transition temperature of the polymeric selective barrier layer and its oxygen transmission rate help to determine whether the combination of this layer with a layer carrying a polymeric oxygen scavenging material will effectively reduce spoilage of food and reduce the amount of oxidation products entering the packaged volume. Further, this invention is based on the discovery that when a polymeric selective barrier layer is oriented in at least one direction, and particularly when the layer is oriented in both machine and transverse directions, the two layers as described above function to scavenge oxygen quickly and to control what oxidation products enter the enclosed volume of the package in which the two layers are incorporated. These and other advantages are apparent from the discussion below.

### DESCRIPTION OF THE FIGURES

Figures 1 and 2 each contain two gas chromatograph traces showing the boiling point of organic compounds in the headspace above the two layers of the compositions of Examples 1 and 2, respectively.
Figure 3 contains two gas chromatograph traces showing the boiling point of organic compounds in the headspace above the two layers of the composition of Comparative Example A.

### DETAILED DESCRIPTION OF THE PREFERRED EMBODIMENTS

The composition of this invention comprises a layer carrying an organic oxygen scavenging material and a polymeric layer which functions as a selective barrier to certain oxidation products, which oxidation products are generally those that are odorous and/or non-consumable, but not to oxygen. A layer may be, for example, a rigid or semi-rigid sheet or a flexible film, or a layer may be, for example, at least a portion of an article of manufacture, such as a bottle wall or bottle-cap insert.

### Layer carrying organic oxygen scavenging material

The layer carrying an organic oxygen scavenging material is any layer that carries enough of an organic oxygen scavenging material that the layer is capable of scavenging at least 0.5 cc O₂/gram of organic oxygen scavenging material/day/atm. Preferably, the layer is capable of scavenging at least about 1, and more preferably at least about 5, cc O₂/gram of organic oxygen scavenging material/day/atm.

The organic oxygen scavenging material may be blended into the layer or laminated or sprayed onto the layer, and/or may be a layer itself. For example, the organic oxygen scavenging material may be an organic compound such as squalene or dehydrated caster oil as disclosed in EP 0 507 207, which is incorporated by reference in its entirety herein. This organic compound may be blended with a polymer carrier, which itself may or may not scavenge oxygen, or it may be coated onto a material such as aluminum foil or paper or even be incorporated into a material such as paper. The organic oxygen scavenging material may be in localized areas on a layer -- for example, the organic oxygen scavenging material may be in a patch that is laminated to a layer such as the polymeric barrier layer, in which case the polymeric barrier layer is also the layer carrying the organic oxygen scavenging material. The organic oxygen scavenging material may be coated onto a polymer layer or onto a multi-layer structure, in which case the organic oxygen scavenging material normally forms its own layer. The organic oxygen scavenging material may also be carried as a layer or in a layer within a multi-layer structure.

As noted above, the organic scavenging material may be a layer itself. The organic scavenging material is typically a polymer having oxidizable sites in the polymer and containing a catalyst such as a transition metal salt that assists initiation of oxidation of the oxidizable sites. Examples of polymers having oxidizable sites include polybutadiene, disclosed in U.S. Pat. No. 5,211,875; poly(meta-xylenediamine-adipic acid) (also known as MXD-6), disclosed in U.S. Pat. Nos. 5,021,515 and 5,049,624 and EP 0 519 616; and poly(ethylene, methyl acrylate, benzyl acrylate), disclosed in U.S. Ser. No. 08/091,120, filed Aug. 12, 1993, inventors T. Ching, K. Katsumoto, S. Current and L. Theard, each of which is incorporated by reference in its entirety herein. Poly(ethylene, alkyl acrylate, benzyl acrylate) can be made by solution transesterification. An ethylene-alkyl acrylate copolymer such as ethylene-methyl acrylate copolymer is dissolved in an appropriate solvent such as decalin, and heated to and maintained at reflux in the presence of an effective amount of a transesterification catalyst, such as tetraethyl titanate or di-butyl tin laurate, and an alcohol containing a benzyl radical, such as benzyl alcohol. The solution is then cooled, and the polymer is precipitated in methanol and dried in a vacuum oven. An effective amount of a transition metal salt catalyst such as cobalt neodecanoate is incorporated into the precipitated polymer by melting the polymer in, for example, an extruder, and mixing the salt dissolved in a solvent such as hexane into the polymer melt. The transesterification above may also occur using a melted ethylene-alkyl acrylate copolymer in a reactive extruder maintained at transesterification conditions and in the presence of an effective amount of a transesterification catalyst and an alcohol containing a benzyl radical.

### Layer Functioning as a Selective Barrier to Certain Oxidation Products

The composition of this invention also comprises a polymeric layer which functions as a selective barrier to certain oxidation products but not to oxygen (also called a polymeric selective barrier layer herein). The oxidation products are often odorous and/or considered not generally recognized as safe (GRAS) food additives by the FDA. These oxidation products result from oxidation of the particular organic oxygen scavenging material utilized. Examples of these oxidation products include carboxylic acids, such as acetic, propionic, butyric, valeric and benzoic acids; aldehydes, such as heptanal and benzaldehyde; ketones, such as acetone and methyl ethyl ketone; esters, such as methyl formate; and other compounds such as benzene.

In one preferred embodiment, a polymeric layer functions as a barrier when it completely blocks an oxidation product or when it impedes migration of an oxidation product to an extent that the amount of oxidation product found in the enclosed volume after 5 days at 49°C produces slight to no odor in the case of odorous compounds or is within a U.S. Food and Drug Administration guideline for extractives in the case of compounds which are not generally regarded as safe. See 21 C.F.R. §§ 170-199 and Recommendations for Chemistry Data for Indirect Food Additive Petitions, published by the U.S. Food and Drug Administration, Sep. 1988, Version 1.2, Mar. 1993, each of which is incorporated in its entirety herein.

The polymeric selective barrier layer does not necessarily impede migration of all oxidation products. For example, it is not necessary that the polymeric selective barrier layer impedes migration of oxidation products such as carbon dioxide, water or compounds affirmed as GRAS. Therefore, these oxidation products may migrate through the polymeric selective barrier layer to the extent recognized as sate by the FDA. Also, the polymeric selective barrier layer may impede migration of many but not all of the oxidation products whose migration is to be impeded. In one preferred embodiment, a layer is considered to be a polymeric selective barrier layer when it prevents at least about half of the number and/or amount of oxidation products having a boiling point of at least about 75°C from passing through the polymeric selective barrier layer from the layer carrying the organic oxygen scavenging material.

The polymeric selective barrier layer also permits oxygen to migrate through it to contact the layer carrying an organic oxygen scavenging material. In one preferred embodiment, the polymeric selective barrier layer permits enough oxygen to migrate through it such that the effective oxygen scavenging rate from the packaged volume for the composition of this invention (i.e. oxygen scavenging layer with polymeric selective barrier layer present) is at least about 0.1 cc O₂/gm of organic oxygen scavenging material/day/atm. Preferably, the polymeric selective barrier layer allows enough oxygen to migrate through it from the packaged volume such that the oxygen scavenging rate for the oxygen scavenging layer is at least about 1, and more preferably, about 5 cc O₂/gm of organic oxygen scavenging material/day/atm.

In another preferred embodiment, the polymeric selective barrier layer has an oxygen transmission rate (OTR) of at least about 1 cc O₂/100 in.² polymeric selective barrier layer/day/atm., as measured by ASTM D-3985, which is incorporated by reference in its entirety herein. Preferably, the OTR is at least about 5, and more preferably, at least about 10, cc O₂/100 in.² polymeric selective barrier layer/day/atm.

The glass transition temperature (T_{g}) as measured by ASTM D-3418, which is incorporated by reference in its entirety herein, has been found to provide a means for determining whether a polymeric layer will be an effective polymeric selective barrier layer to many of the odorous and/or non-consumable oxidation products. Generally, if the T_{g} of a polymeric layer is at least about 5°C above the use temperature of the composition of this invention, the polymeric layer will be a polymeric selective barrier layer. Preferably, the T_{g} of a polymeric selective barrier layer is at least about 10°C above, and more preferably is at least about 20°C above, the use temperature.

For some polymers, it may be necessary to orient the polymer in order for it to be an effective polymeric selective barrier layer. See U.S. Pat. Nos. 3,903,294, 3,880,974, 3,857,917 and 3,510,552, all of which are incorporated by reference in their entirety herein, for some examples of methods of orienting polymers. Where it is necessary to orient a polymer to make it an effective polymeric selective barrier layer, the use temperature of that polymer is the highest temperature to which the polymeric selective barrier layer is exposed after orienting the polymer. The use temperature in this case may be encountered at any time after which the polymer has been oriented, such as during film processing, during lamination or during the time that the oriented polymer is to function as a selective barrier. Of course, if the polymeric selective barrier layer is exposed to a higher temperature than the use temperature but is subsequently oriented, the use temperature is the highest temperature to which the polymeric selective barrier layer is exposed after this subsequent orientation of the polymer layer.

It has also been found that certain polymeric layers that have been oriented (i.e. stretched in at least one direction in the plane of the layer) are effective polymeric selective barrier layers. For example, oriented poly(ethylene terephthalate) (OPET) and biaxially oriented nylon-6 are each effective polymeric selective barrier layers to many of the oxidation products of polymeric oxygen scavenging material.

For polymers in which orientation of the film is not necessary for the polymer to be an effective polymeric selective barrier layer, the use temperature is the temperature to which the composition of this invention is exposed while the composition is scavenging oxygen from the packaged volume and protecting the contents (ex. food) of the container into which the composition of this invention has been incorporated. For example, if the composition of this invention is incorporated into meat packaging, the use temperature would be the highest temperature that the meat package would encounter while the composition of this invention was scavenging oxygen to protect the meat from the oxygen.

It is theorized that polymers having particular crystalline and/or ordered structures, as indicated by the T_{g}, by the polymer crystallinity, and/or by the fact that the polymer has been oriented, provide channels within the polymer having dimensions that selectively block the diffusion of some larger molecules, such as odorous or extractive oxidation products, yet permit smaller molecules such as oxygen to pass through the polymer. This theory is supplied only for the purpose of helping to explain why certain polymers are effective as polymeric selective barrier layers and is not limiting of the scope of this invention.

In one preferred embodiment, the T_{g} of the polymeric selective barrier layer is at least about 40°C. Preferably, the T_{g} of the polymeric selective barrier layer is at least about 50°C, and more preferably the T_{g} of the polymeric selective barrier layer is at least about 60°C.

Solubility of the oxidation products in the polymeric selective barrier layer also can be a factor in determining whether a selected polymer will act as a polymeric selective barrier layer. If an oxidation product is very soluble in a polymer, it is likely to migrate through the polymer, and therefore the polymer would not be useful as a polymeric selective barrier layer. An oxidation product that is soluble in a polymer can change the T_{g} of the polymer. As a result, a polymer having a T_{g} sufficient to block oxidation products may have its T_{g} reduced by an oxidation product to a level that the polymer cannot be used as a polymeric selective barrier layer. Since this effect occurs over time, a polymer may be an effective polymeric selective barrier layer in some applications, such as where the food product contained within the package is consumed shortly after packaging, but may not be an effective polymeric selective barrier layer in other situations, such as where the food product is expected to have a shelf-life of many years.

A polymeric selective barrier layer may contain plasticizers such as phthalate esters and/or poly(ethylene glycols). A polymeric selective barrier layer may be a blend of polymers, such as a compatibilized blend of PET and nylon-6 which is then oriented. The polymeric selective barrier layer may be modified (for example, with fillers such as calcium carbonate and/or TiO₂). The polymeric selective barrier layer may also be a multi-layer construction in which any one layer alone does not necessarily qualify as a polymeric selective barrier layer, but together the multi-layer construction is a polymeric selective barrier layer.

### Situation of the Two Layers

The polymeric selective barrier layer is situated between the enclosed space or packaged volume from which oxygen is to be scavenged and the layer carrying an organic oxygen scavenging material. The layers may be two separate layers or multi-layer structures that do not physically contact each other, or the two layers may be part of the same multi-layer structure.

In a preferred embodiment, the composition of this invention comprises two layers which have been coextruded or laminated together. In another embodiment of this invention, the composition comprises three layers which have been coextruded or laminated together, where a tie layer is used between the layer carrying an organic oxygen scavenging material and the polymeric selective barrier layer. Suitable tie-layers include ethylene-acrylic acid ionomers and ethylene-alkyl acrylate ionomers, such as those disclosed in U.S. Ser. No. 08/144,173, filed Oct. 27, 1993, inventors J. Wang, D. Rosendale, V. Kurkov and L. Theard, which is incorporated by reference in its entirety herein. In a further embodiment of this invention, the composition comprises three layers which have been coextruded or laminated together: an oxygen barrier layer, which has an OTR of no more than about 1 cc O₂/100 in.² of oxygen barrier layer/day/atm.; a layer carrying an organic oxygen scavenging material; and a polymeric selective barrier layer. Examples of O₂ barrier layers include ethylene-vinyl alcohol copolymer and poly(vinylidene chloride).

When the polymeric selective barrier layer is an oriented layer such as OPET or oriented nylon, the polymeric selective barrier layer may be oriented prior to it being co-laminated with the layer carrying an organic oxygen scavenging material. Alternatively, an unoriented polymeric selective barrier layer may be coextruded with the layer carrying an organic oxygen scavenging material, and this multi-layer structure may then be oriented.

The following examples are illustrative and not limiting of the scope of the invention.

### EXAMPLES

### Examples 1-2 and Comparative Example A

An ethylene-methyl acrylate-benzyl acrylate oxygen scavenging material was made by the method disclosed in U.S. Ser. No. 08/091,120, filed Jul. 13, 1993, inventors T. Ching, K. Katsumoto, S. Current, and L. Theard. This material had approximately 17 wt. % methyl acrylate, 11 wt. % benzyl acrylate, and about 1000 ppm cobalt from cobalt neodecanoate.

For analysis of odorous compounds, this organic oxygen scavenging material was extruded to form a mono-layer film approximately 0.5 mil thick. The film was UV-irradiated by the method disclosed in U.S. Pat. No. 5,211,875, and the film was permitted to scavenge oxygen for 3-5 weeks.

A film of a polymer selected for evaluation of its performance as a polymeric selective barrier layer was also extruded to a thickness of approximately 0.5 mil. The film of ethylene-methyl acrylate-benzyl acrylate oxygen scavenging material and the film of selected polymer were then placed between two rectangular aluminum blocks, each being 3/8 in. wide and 2 in. long, and each having a head-space channel of about 0.25 in. depth for most of the length of the blocks which faced each of the two films. The blocks were tightened together so that the films were secured essentially air-tight between the blocks. The assembly was placed in an oven and maintained at 49°C for 120 hours. The head-space channels in the two blocks were equipped to be maintained at isobaric conditions.

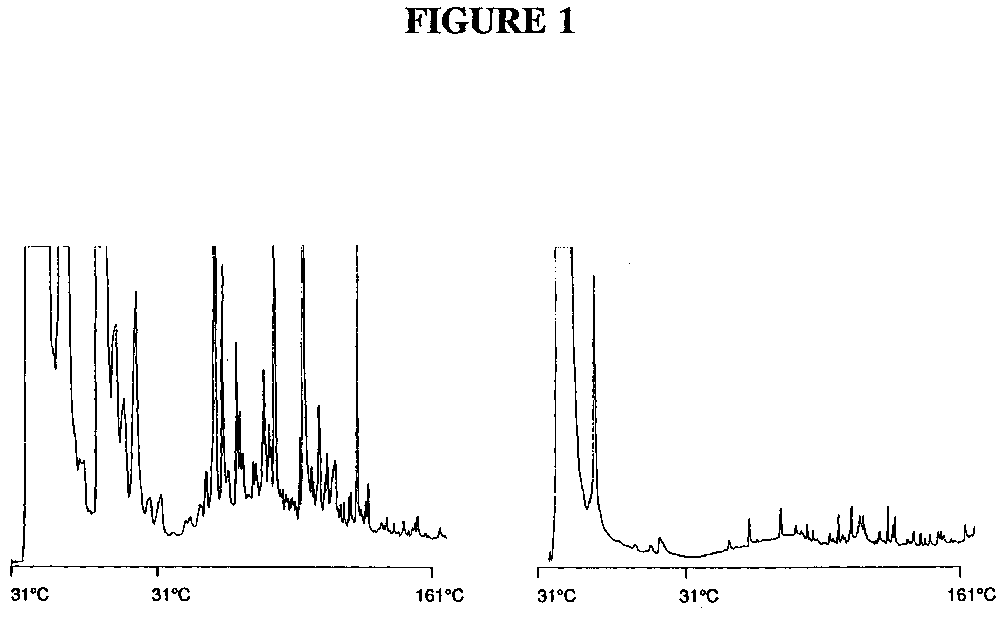

Samples were removed from each head-space, and gas chromatography (GC) was used to determine the presence of odorous compounds. Samples were also sniffed to determine whether odors were present. The results of these tests are given in Table 1 and Figures 1-3.

Figures 1-3 show GC traces for three two-layer structures, where OPET, biaxially oriented nylon-6, and biaxially oriented polypropylene (BOPP) were individually used as candidate polymeric selective barrier layers, and ethylene-methyl acrylate-benzyl acrylate oxygen scavenging material as discussed above was used as the layer carrying the organic oxygen scavenging material. The biaxially oriented nylon-6 (poly(eta-caprolactam)) is available from Allied Signal, grade CE1500, 0.60 mil thickness. Biaxially oriented nylon-6 is available from Mobil Chem. Co. Grade L10 4CM. Standard packaging grade OPET is available from American Hoechst.

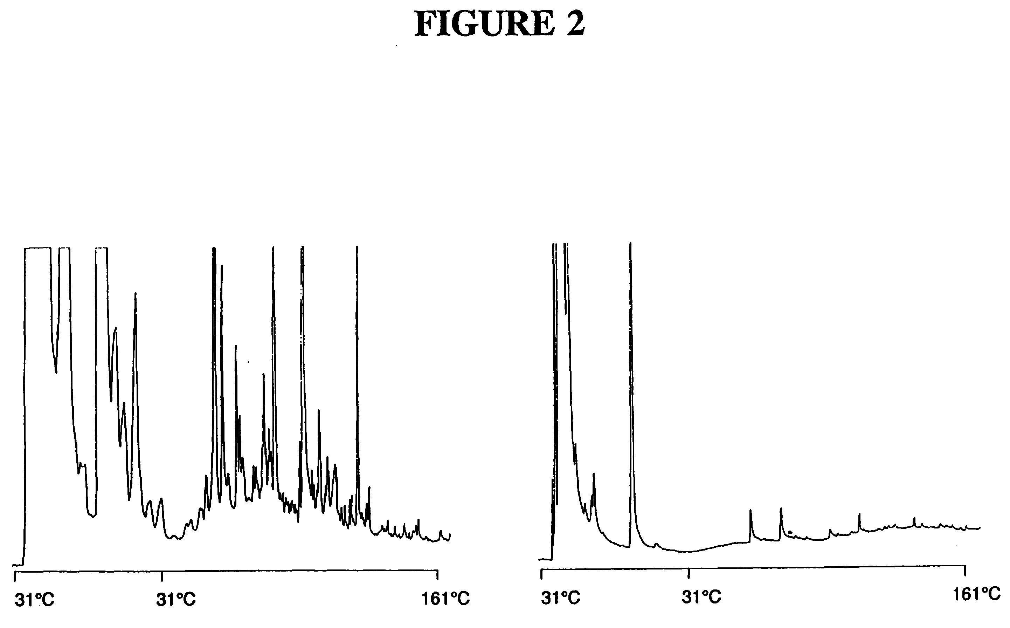

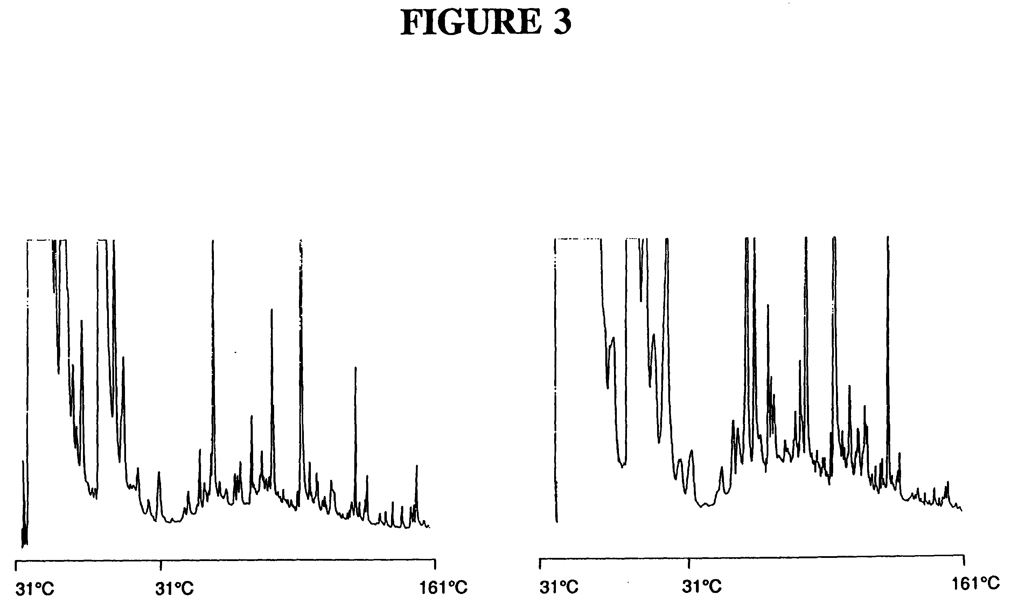

Each Figure contains two traces. The trace on the left is the GC analysis of organic materials in the head-space above the layer carrying an organic oxygen scavenging material (i.e. the ethylene-methyl acrylate-benzyl acrylate oxygen scavenging material). The trace on the right is the GC analysis of organic materials in the head-space above the candidate polymeric selective barrier layer. These traces were generated by holding the temperature constant for the first part of the test, then slowly increasing the temperature to the maximum indicated on the trace. Each peak represents at least one compound or oxidation product which evolved at the indicated temperature, and the area under the peak is a function of the amount of oxidation product that evolved at that temperature. The traces for OPET- (Fig. 1) and biaxially oriented nylon-6-containing films (Fig. 2) have many fewer peaks present in the head-space above the candidate polymeric selective barrier layer than the trace for film utilizing BOPP (Fig. 3). These GC traces illustrate the effectiveness of OPET and biaxially oriented nylon-6 as polymeric selective barrier layers, and also show that BOPP is not useful as a polymeric selective barrier layer.

For analysis of extractives, low density polyethylene (Chevron Chemical Co. Grade 1017) and the ethylene-methyl acrylate-benzyl acrylate oxygen scavenging material were coextruded with OPET, biaxially oriented nylon-6 and BOPP to form films having three layers, the candidate polymeric selective barrier layer (i.e. OPET, biaxially oriented nylon-6 or BOPP), the layer carrying the organic oxygen scavenging material (i.e. the layer of ethylene-methyl acrylate-benzyl acrylate oxygen scavenging material), and the polyethylene, respectively. Each layer was approximately 0.5 mil thick.

Each of the 3-layer films was then separately placed between two aluminum rectangular blocks, each being 3/8 in. wide and 2 in. long, and one block having a channel of about 0.03 in. depth in most of the length of its face which abutted the layer of selected polymer to be analyzed for its performance as a polymeric selective barrier layer. The blocks were tightened together so that the 3-layer film was secured essentially air-tight between the blocks. Mazola corn oil was injected into the channel through a port. The assembly was placed in an oven and maintained at 49°C for 120 hours. The corn oil was sampled after this time, and the oxidation products extracted into the corn oil were analyzed using GC and GC with mass spectrometry. Toluene was used as an internal standard in the corn oil to calibrate the results.

These tests generated GC traces similar to those shown in Figures 1-3 and showed few extractives for the films using OPET and biaxially oriented nylon-6, whereas the film using BOPP had extensive extractives.

**TABLE 1**

| Ex. # | Layer 1: (layer carrying organic oxygen scavenging material) | Layer 2: (candidate for polymeric selective barrier layer) | T_{g} of Layer 2, /C | OTR of Layer 2, cc O₂/100 in. ²/day/ atm. | Results of odor test from barrier side (sniffing) | Results of extractables test |
|---|---|---|---|---|---|---|
| 1 | Ethylene-methyl acrylate-benzyl acrylate copolymer containing 1000 ppm cobalt | Oriented poly (ethylene terephthalate) | 125 | 10 | No detectable odors | Blocked extractives |
| 2 | Same as Ex. 1 | Biaxially oriented nylon-6 | 40-60 | 1.4 | No detectable odors | Not available |
| Compar. A | Same as Ex. 1 | Biaxially oriented polypropylene | -20 | 155 | Rancid and sharp smells were apparent | Did not effectively block extractives |

## Claims

1. A method for making a package comprising:
(i) identifying the intended use temperature of the package; and
(ii) forming a package comprising a layer carrying an organic oxygen scavenging material and a polymeric selective barrier layer, wherein the polymeric selective barrier layer is situated between the package volume and the layer carrying an organic oxygen scavenging material, the polymeric selective barrier layer has a glass transition temperature at least 5°C above the use temperature, and the polymeric selective barrier layer has an oxygen transmission rate of at least 1 cc O₂/100 in.² polymeric selective barrier layer/day/atm.

2. A method for making a package comprising:
(i) identifying the intended use temperature of the package; and
(ii) forming a package comprising a layer carrying an organic oxygen scavenging material and a polymeric selective barrier layer, wherein the polymeric selective barrier layer is situated between the package volume and the layer carrying an organic oxygen scavenging material, the polymeric selective barrier layer has a glass transition temperature at least 5°C above the use temperature, and the composition has an effective oxygen scavenging rate of at least 0.5 cc O₂/gm of organic oxygen scavenging material/day/atm.

3. A method according to claim 1 or 2, wherein the layer carrying an organic oxygen scavenging material comprises polymer having oxidizable sites in the polymer and containing a transition metal salt catalyst.

4. A method according to claim 3, wherein the organic scavenging material comprises ethylene-methyl acrylate-benzyl acrylate copolymer and an amount of transition metal salt that is effective to promote oxygen scavenging.

5. A method according to any preceding claim, wherein the polymeric selective barrier layer is a polymer that has been oriented in at least the machine direction.

6. A method according to claim 3 or 4, wherein the polymeric selective barrier layer comprises oriented poly(ethylene terephthalate).

7. A method according to claim 3 or 4, wherein the polymeric selective barrier layer comprises biaxially oriented nylon-6.

8. A composition comprising a layer carrying an organic oxygen scavenging material and a polymeric selective barrier layer, wherein the polymeric selective barrier layer has a glass transition temperature of at least 40°C and the polymeric selective barrier layer has an oxygen transmission rate of at least 1 cc O₂/100 in.² polymeric selective barrier layer/day/atm.

9. A composition comprising a layer carrying an organic oxygen scavenging material and a polymeric selective barrier layer, wherein the polymeric selective barrier layer has a glass transition temperature of at least 40°C and the composition has an effective oxygen scavenging rate of at least 0.5 cc O₂/gm of organic oxygen scavenging material/day/atm.

10. The composition of claim 8 or 9, wherein the layer carrying an organic oxygen scavenging material comprises polymer having oxidizable sites in the polymer and containing a transition metal salt catalyst.

11. The composition of claim 10, wherein the organic scavenging material comprises ethylene-methyl acrylate-benzyl acrylate copolymer and an amount of transition metal salt that is effective to promote oxygen scavenging.

12. The composition of claim 8, 9, 10 or 11, wherein the polymeric selective barrier layer is a polymer that has been oriented in at least the machine direction.

13. The composition of claim 10 or 11, wherein the polymeric selective barrier layer comprises oriented poly(ethylene terephthalate).

14. The composition of claim 10 or 11, wherein the polymeric selective barrier layer comprises biaxially oriented nylon-6.

15. The composition of any one of claims 8-14, wherein the composition is a film.

16. A package comprising a layer carrying an organic oxygen scavenging material and a polymeric selective barrier layer, wherein the polymeric selective barrier layer is situated between the packaged volume and the layer carrying an organic oxygen scavenging material, the polymeric selective barrier layer has a glass transition temperature of at least 40°C and the polymeric selective barrier layer has an oxygen transmission rate of at least 1 cc O₂/100 in.² polymeric selective barrier layer/day/atm.

17. A package comprising a layer carrying an organic oxygen scavenging material and a polymeric selective barrier layer, wherein the polymeric selective barrier layer is situated between the packaged volume and the layer carrying an organic oxygen scavenging material, the polymeric selective barrier layer has a glass transition temperature of at least 40°C and the composition has an effective oxygen scavenging rate of at least 0.5 cc O₂/gm of organic oxygen scavenging material/day/atm.

18. A method for reducing the amount and/or type of organic oxidation products which enter a packaged volume, which organic oxidation products are produced by oxidation of an organic oxygen scavenging material, comprising situating a polymeric selective barrier layer having a glass transition temperature of at least 40°C between the packaged volume and a layer carrying an organic oxygen scavenging material.

19. The method of claim 18 wherein the polymeric selective barrier layer has an oxygen transmission rate of at least 1 cc O₂/100 in.² polymeric selective barrier layer/day/atm.

20. The method of claim 18 wherein at least 0.5 cc of O₂ are scavenged from the packaged volume/gm of organic oxygen scavenging material/day/atm.

21. A method for reducing the amount and/or type of organic oxidation products which enter a packaged volume, which organic oxidation products are produced by oxidation of an organic oxygen scavenging material, comprising situating a polymeric selective barrier layer having a glass transition temperature at least 5°C above the use temperature between the packaged volume and a layer carrying an organic oxygen scavenging material.

22. The method of claim 21 wherein the polymeric selective barrier layer has an oxygen transmission rate of at least 1 cc O₂/100 in.² polymeric selective barrier layer/day/atm.

23. The method of claim 21 wherein at least 0.5 cc of O₂ are scavenged from the packaged volume/gm of organic oxygen scavenging material/day/atm.

## Patentansprüche

1. Verfahren zur Herstellung einer Verpackung, umfassend
(i) Bestimmen der vorgesehenen Einsatztemperatur der Verpackung; und
(ii) Ausbilden einer Verpackung, umfassend eine Schicht mit einem organischen sauerstoffaufnehmenden Material und eine selektive Polymergrenzschicht, wobei die selektive Polymergrenzschicht zwischen dem Verpackungsinhalt und der Schicht mit dem organischen sauerstoffaufnehmenden Material liegt, die selektive Polymergrenzschicht eine Glasübergangstemperatur hat, die mindestens 5°C über der Einsatztemperatur liegt, und die selektive Polymergrenzschicht eine Sauerstoffdurchlassrate hat von mindestens einem Kubikzentimeter Sauerstoff pro 100 Quadratinch selektive Polymergrenzschicht, Tag und Atmosphärendruck.

2. Verfahren zur Herstellung einer Verpackung, umfassend
(i) Bestimmen der vorgesehenen Einsatztemperatur der Verpackung; und
(ii) Ausbilden einer Verpackung, umfassend eine Schicht mit einem organischen sauerstoffaufnehmenden Material und eine selektive Polymergrenzschicht, wobei die selektive Polymergrenzschicht zwischen dem Verpackungsinhalt und der Schicht mit dem organischen sauerstoffaufnehmenden Material liegt, die selektive Polymergrenzschicht eine Glasübergangstemperatur hat, die mindestens 5°C über der Einsatztemperatur liegt, und die Zusammensetzung eine effektive Sauerstoffaufnahmerate aufweist von mindestens 0,5 Kubikzentimenter Sauerstoff pro Gramm organisches sauerstoffaufnehmendes Material, Tag und Atmosphärendruck.

3. Verfahren nach Anspruch 1 oder 2, wobei die Schicht mit dem organischen sauerstoffaufnehmenden Material ein Polymer umfasst mit oxidierbaren Stellen im Polymer und mit einem Übergangsmetallsalz-Katalysator.

4. Verfahren nach Anspruch 3, wobei das organische Aufnahmematerial ein Ethylen-Methylacrylat-Benzylacrylat-Copolymer umfasst und eine wirksame Menge Übergangsmetallsalz zur Förderung der Sauerstoffaufnahme.

5. Verfahren nach einem der vorstehenden Ansprüche, wobei die selektive Polymergrenzschicht ein Polymer ist, das zumindest in der Bearbeitungsrichtung gerichtet ist.

6. Verfahren nach Anspruch 3 oder 4, wobei die selektive Polymergrenzschicht gerichtetes Polyethylenterephthalat enthält.

7. Verfahren nach Anspruch 3 oder 4, wobei die selektive Polymergrenzschicht biaxial gerichtetes Nylon-6 enthält.

8. Zusammensetzung, umfassend eine Schicht mit einem organischen sauerstoffaufnehmenden Material und einer selektiven Polymergrenzschicht, wobei die selektive Polymergrenzschicht eine Glasübergangstemperatur von mindestens 40°C hat und eine Sauerstoffdurchlassrate von mindestens einem Kubikzentimeter Sauerstoff pro 100 Quadratinch selektive Polymergrenzschicht, Tag und Atmosphärendruck.

9. Zusammensetzung, umfassend eine Schicht mit einem organischen sauerstoffaufnehmenden Material und einer selektiven Polymergrenzschicht, wobei die selektive Polymergrenzschicht eine Glasübergangstemperatur von mindestens 40°C hat und die Zusammensetzung eine wirksame Sauerstoffaufnahmerate besitzt von mindestens 0,5 Kubikzentimeter Sauerstoff pro Gramm organisches sauerstoffaufnehmendes Material, Tag und Atmosphärendruck.

10. Zusammensetzung nach Anspruch 8 oder 9, wobei die Schicht mit dem organischen sauerstoffaufnehmenden Material ein Polymer umfasst mit oxidierbaren Stellen im Polymer und einem Übergangsmetallsalz-Katalysator.

11. Zusammensetzung nach Anspruch 10, wobei das organische Aufnahmematerial ein Ethylen-Methylacrylat-Benzylacrylat-Copolymer umfasst und eine wirksame Menge Übergangsmetallsalz zur Förderung der Sauerstoffaufnahme.

12. Zusammensetzung nach Anspruch 8, 9, 10 oder 11, wobei die selektive Polymergrenzschicht ein Polymer ist, das zumindest in Bearbeitungsrichtung gerichtet ist.

13. Zusammensetzung nach Anspruch 10 oder 11, wobei die selektive Polymergrenzschicht gerichtetes Polyethylenterephthalat enthält.

14. Zusammensetzung nach Anspruch 10 oder 11, wobei die selektive Polymergrenzschicht biaxial gerichtetes Nylon-6 umfasst.

15. Zusammensetzung nach einem der Ansprüche 8 bis 14, wobei die Zusammensetzung ein Film ist.

16. Verpackung, umfassend eine Schicht mit einem organischen sauerstoffaufnehmenden Material und einer selektiven Polymergrenzschicht, wobei die selektive Polymergrenzschicht zwischen dem Packungsinhalt und der Schicht mit dem organischen sauerstoffaufnehmenden Material liegt, die selektive Polymergrenzschicht eine Glasübergangstemperatur von mindestens 40°C hat und die selektive Polymergrenzschicht eine Sauerstoffdurchlassrate aufweist von mindestens einem Kubikzentimeter Sauerstoff pro 100 Quadratinch selektive Polymergrenzschicht, Tag und Atmosphärendruck.

17. Verpackung, umfassend eine Schicht mit einem organischen sauerstoffaufnehmenden Material und einer selektiven Polymergrenzschicht, wobei die selektive Polymergrenzschicht zwischen dem Verpackungsinhalt und der Schicht mit dem organischen sauerstoffaufnehmenden Material liegt, die selektive Polymergrenzschicht eine Glasübergangstemperatur von mindestens 40°C hat und die Zusammensetzung eine wirksame Sauerstoffaufnahmerate aufweist von mindestens 0,5 Kubikzentimeter Sauerstoff pro Gramm organisches sauerstoffaufnehmendes Material, Tag und Atmosphärendruck.

18. Verfahren zur Verringerung der Menge und/oder Art organischer Oxidationsprodukte, die in den Packungsinhalt eindringen, wobei die organischen Oxidationsprodukte durch Oxidation eines organischen sauerstoffaufnehmenden Materials erzeugt werden, umfassend das Einbringen einer selektiven Polymergrenzschicht mit einer Glasübergangstemperatur von mindestens 40°C zwischen den Packungsinhalt und einer Schicht mit einem organischen sauerstoffaufnehmenden Material.

19. Verfahren nach Anspruch 18, wobei die selektive Polymergrenzschicht eine Sauerstoffdurchlassrate von mindestens einem Kubikzentimeter Sauerstoff pro 100 Quadratinch selektive Polymergrenzschicht, Tag und Atmosphärendruck.

20. Verfahren nach Anspruch 18, wobei mindestens 0,5 Kubikzentimeter Sauerstoff aus dem Packungsinhalt aufgenommen werden pro Gramm organisches sauerstoffaufnehmendes Material, Tag und Atmosphärendruck.

21. Verfahren zur Verringerung der Menge und/oder Art organischer Oxidationsprodukte, die in einen Packungsinhalt eindringen, wobei die organischen Oxidationsprodukte durch Oxidation eines organischen sauerstoffaufnehmenden Materials entstehen, umfassend das Einbringen einer selektiven Polymergrenzschicht mit einer Glasübergangstemperatur, die mindestens 5°C über der Einsatztemperatur liegt, zwischen den Verpackungsinhalt und einer Schicht mit einem organischen sauerstoffaufnehmenden Material.

22. Verfahren nach Anspruch 21, wobei die selektive Polymergrenzschicht eine Sauerstoffdurchlassrate besitzt von mindestens einem Kubikzentimeter Sauerstoff pro 100 Quadratinch selektiver Polymergrenzschicht, Tag und Atmosphärendruck.

23. Verfahren nach Anspruch 21, wobei mindestens 0,5 Kubikzentimeter Sauerstoff aus dem Packungsinhalt aufgenommen werden pro Gramm organisches sauerstoffaufnehmendes Material, Tag und Atmosphärendruck.

## Revendications

1. Procédé pour la production d'un emballage, comprenant les étapes consistant :
(i) à identifier la température d'utilisation envisagée de l'emballage ; et
(ii) à former un emballage comprenant une couche portant une matière fixant l'oxygène organique et une couche d'arrêt sélective polymérique, ladite couche d'arrêt sélective polymérique étant située entre le volume emballé et la couche portant une matière fixant l'oxygène organique, la couche d'arrêt sélective polymérique ayant une température de transition vitreuse supérieure d'au moins 5°C à la température d'utilisation, et la couche d'arrêt sélective polymérique ayant une vitesse de transmission d'oxygène d'au moins 1 cm³ de 0₂/100 in² de couche d'arrêt sélective polymérique/jour/atmosphère.

2. Procédé pour la production d'un emballage, comprenant les étapes consistant :
(i) à identifier la température d'utilisation envisagée de l'emballage ; et
(ii) à former un emballage comprenant une couche portant une matière fixant l'oxygène organique et une couche d'arrêt sélective polymérique, ladite couche d'arrêt sélective polymérique étant située entre le volume emballé et la couche portant une matière fixant l'oxygène organique, la couche d'arrêt sélective polymérique ayant une température de transition vitreuse supérieure d'au moins 5°C à la température d'utilisation, et la composition ayant une vitesse de fixation d'oxygène efficace d'au moins 0,5 cm³ de O₂/g de matière fixant l'oxygène organique/jour/atmosphère.

3. Procédé suivant la revendication 1 ou 2, dans lequel la couche portant une matière fixant l'oxygène organique comprend un polymère renfermant des sites oxydables et contenant un catalyseur à base d'un sel de métal de transition.

4. Procédé suivant la revendication 3, dans lequel la matière fixant l'oxygène organique comprend un copolymère éthylène-acrylate de méthyle-acrylate de benzyle et une quantité d'un sel de métal de transition qui est efficace pour activer la fixation de l'oxygène.

5. Procédé suivant l'une quelconque des revendications précédentes, dans lequel la couche d'arrêt sélective polymérique est constituée d'un polymère qui a été orienté au moins dans la direction machine.

6. Procédé suivant la revendication 3 ou 4, dans lequel la couche d'arrêt sélective polymérique comprend un poly(téréphtalate d'éthylène) orienté.

7. Procédé suivant la revendication 3 ou 4, dans lequel la couche d'arrêt sélective polymérique comprend un Nylon 6 à orientation biaxiale.

8. Composition comprenant une couche portant une matière fixant l'oxygène organique et une couche d'arrêt sélective polymérique, dans laquelle la couche d'arrêt sélective polymérique a une température de transition vitreuse d'au moins 40°C et la couche d'arrêt sélective polymérique a une vitesse de transmission de l'oxygène d'au moins 1 cm³ de O₂/100 in² de couche d'arrêt sélective polymérique/jour/atmosphère.

9. Composition comprenant une couche portant une matière fixant l'oxygène organique et une couche d'arrêt sélective polymérique, dans laquelle la couche d'arrêt sélective polymérique a une température de transition vitreuse d'au moins 40°C et la composition a une vitesse de fixation d'oxygène efficace d'au moins 0,5 cm³ de 0₂/g de matière fixant l'oxygène organique/jour/atmosphère.

10. Composition suivant la revendication 8 ou 9, dans laquelle la couche portant une matière fixant l'oxygène organique comprend un polymère renfermant des sites oxydables et contenant un catalyseur à base d'un sel de métal de transition.

11. Composition suivant la revendication 10, dans laquelle la matière fixant l'oxygène organique comprend un copolymère éthylène-acrylate de méthyle-acrylate de benzyle et une quantité d'un sel de métal de transition qui est efficace pour activer la fixation de l'oxygène.

12. Composition suivant la revendication 8, 9, 10 ou 11, dans laquelle la couche d'arrêt sélective polymérique est constituée d'un polymère qui a été orienté au moins dans la direction machine.

13. Composition suivant la revendication 10 ou 11, dans laquelle la couche d'arrêt sélective polymérique comprend un poly(téréphtalate d'éthylène) orienté.

14. Composition suivant la revendication 10 ou 11, dans laquelle la couche d'arrêt sélective polymérique comprend un Nylon 6 à orientation biaxiale.

15. Composition suivant l'une quelconque des revendications 8 à 14, qui est sous forme d'un film.

16. Emballage comprenant une couche portant une matière fixant l'oxygène organique et une couche d'arrêt sélective polymérique, dans lequel la couche d'arrêt sélective polymérique est située entre le volume emballé et la couche portant une matière fixant l'oxygène organique, la couche d'arrêt sélective polymérique a une température de transition vitreuse d'au moins 40°C et la couche d'arrêt sélective polymérique a une vitesse de transmission d'oxygène d'au moins 1 cm³ de O₂/100 in² de couche d'arrêt sélective polymérique/jour/atmosphère.

17. Emballage comprenant une couche portant une matière fixant l'oxygène organique et une couche d'arrêt sélective polymérique, dans lequel la couche d'arrêt sélective polymérique est située entre le volume emballé et la couche portant une matière fixant l'oxygène organique, la couche d'arrêt sélective polymérique a une température de transition vitreuse d'au moins 40°C et la composition a une vitesse de fixation d'oxygène efficace d'au moins 0,5 cm³ de O₂/g de matière fixant l'oxygène organique/jour/atmosphère.

18. Procédé pour réduire la quantité et/ou le type de produits organiques d'oxydation pénétrant dans un volume emballé, produits organiques d'oxydation qui sont formés par oxydation d'une matière fixant l'oxygène organique, comprenant la mise en place d'une couche d'arrêt sélective polymérique ayant une température de transition vitreuse d'au moins 40°C entre le volume emballé et une couche portant une matière fixant l'oxygène organique.

19. Procédé suivant la revendication 18, dans lequel la couche d'arrêt sélective polymérique a une vitesse de transmission de l'oxygène d'au moins 1 cm³ de O₂/100 in² de couche d'arrêt sélective polymérique/jour/atmosphère.

20. Procédé suivant la revendication 18, dans lequel un volume d'au moins 0,5 cm³ de O₂ est fixé à partir du volume emballé/g de matière fixant l'oxygène organique/jour/atmosphère.

21. Procédé pour réduire la quantité et/ou le type de produits organiques d'oxydation pénétrant dans un volume emballé, lesdits produits organiques d'oxydation étant formés par oxydation d'une matière fixant l'oxygène organique, comprenant la mise en place d'une couche d'arrêt sélective polymérique ayant une température de transition vitreuse supérieure d'au moins 5°C à la température d'utilisation entre le volume emballé et la couche portant une matière fixant l'oxygène organique.

22. Procédé suivant la revendication 21, dans lequel la couche d'arrêt sélective polymérique a une vitesse de transmission de l'oxygène d'au moins 1 cm³ de O₂/100 in² de couche d'arrêt sélective polymérique/jour/atmosphère.

23. Procédé suivant la revendication 21, dans lequel un volume d'au moins 0,5 cm³ de O₂ est fixé à partir du volume emballé/g de matière fixant l'oxygène organique/jour/atmosphère.
